# EUROPÄISCHE PATENTSCHRIFT

(11) **EP 0 957 133 B1**
(45) Veröffentlichungstag und Bekanntmachung des Hinweises auf die Patenterteilung: **30.03.2005**
(21) Anmeldenummer: 99108023.5
(22) Anmeldetag: 23.04.1999
(51) Int. Cl.: C08L 95/00, C09D 195/00

(54) **Verfahren zur Herstellung einer heissapplizierbaren, akustisch wirksamen, bituminösen Masse, daraus hergestellte Masse und ihre Verwendungen**
Process for the preparation of a sound damping heat -applicable bitumen composition, products therefrom and their applications
Procédé de préparation d'une masse bitumineuse insonorisante applicable à chaud, le produit ainsi obtenu, ses applications

(30) Priorität: 14.05.1998 DE 19821633
(43) Veröffentlichungstag der Anmeldung: 17.11.1999
(73) Patentinhaber: CWW-GERKO Akustik GmbH & Co. KG, 60388 Frankfurt (DE)
(72) Erfinder: Bildner, Karlheinz, 63589 Linsengericht (DE); Kornacki, Zdislaw Dr. rer. nat. Dipl.Ing., 60314 Frankfurt (DE)
(74) Vertreter: Hebing, Norbert

(56) Entgegenhaltungen:
- EP-A- 0 617 098
- EP-A- 0 808 877
- FR-A- 1 511 604
- GB-A- 2 076 824

## Beschreibung

Die Erfindung betrifft ein Verfahren zur Herstellung einer heißapplizierbaren, akustisch wirksamen, bituminösen Masse, insbesondere Antidröhnmasse für Kraftfahrzeuge, bei welchem Bitumen und weitere Stoffe, wie Polymere, Wachse und nicht vernetzbare Klebeharze, bei Temperaturen von 100°C bis 200°C zu einer homogenen Masse zusammengemischt werden. Weiterhin betrifft die Erfindung eine nach diesem Verfahren herstellbare, aktustisch wirksame, bituminöse Masse sowie Bitumenfolie.

Massen dieser Art werden insbesondere in Kraftfahrzeugen zur Beschichtung von Karosserieblechen verwendet und dienen der Schalldämmung, Entdröhnung und dem Korrosionsschutz. Als Beispiel für den Stand der Technik sei auf die EP 0 617 098 verwiesen. Solche Massen werden meist bei Temperaturen von 100°C bis 160°C im Airless- oder Extrusionsverfahren mit Robotersteuerung auf die Karosseriebleche aufgetragen, bevor die Karosseriebleche lackiert sind.

Die herkömmlichen, heißapplizierbaren Massen sowie die Bitumenfolien verhalten sich wie klassische Thermoplaste, wodurch zum Beispiel im Motorraum durch die Motorwärme oder durch Sonneneinstrahlung auftretende hohe Temperaturen sich ihre Dämpfungseigenschaften und andere physiko-mechanischen Parameter, wie Härte, Fogging, Steifigkeit, verschlechtern können.

In jüngster Zeit entstand die Forderung, dass Beschichtungen für Karosseriebleche neben ihrer akustischen Wirksamkeit zugleich eine Versteifungswirkung ausüben. Der Grund hierfür liegt in der Forderung nach Gewichtseinsparung im Automobilbau und der dadurch angestrebten Verringerung der Blechdicke. Bis jetzt eingesetzte Antidröhnmassen auf Bitumenbasis können diese Forderung nicht erfüllen, weil zur Herbeiführung einer Versteifungswirkung reaktive Systeme eingesetzt werden müssen, die durch Änderung der Molekularstruktur bzw. des Molekulargewichtes bestimmte Eigenschaften der Masse bewirken.

Man hat zwar schon den bituminösen Massen hochschmelzende Harze hinzugegeben, um eine größere Härte zu erzielen. Da Kraftfahrzeuge sich jedoch durch Sonneneinstrahlung oftmals sehr stark erwärmen und da es bei Verwendung solcher Massen im Motorraum durch den Motor zu einer starken Erwärmung der aufgebrachten Antidröhnmasse kommt, werden solche Massen trotz des Zusatzes hochschmelzender Harze oftmals unerwünscht weich, wodurch sie ihre aussteifende Wirkung gänzlich verlieren und sogar verlaufen können.

Der Erfindung liegt das Problem zugrunde, ein Verfahren zur Herstellung einer akustisch wirksamen, bituminösen Masse, insbesondere Antidröhnmasse für ein Kraftfahrzeug, zu entwickeln, welches zu einer Masse mit hoher Versteifungswirkung führt, ohne dass die akustische Wirksamkeit vermindert wird und die auch bei höheren Temperaturen ihre aussteifende Wirkung beibehält. Weiterhin soll eine nach dem Verfahren herstellbare, bituminöse Masse und eine Bitumenfolie entwickelt werden.

Das erstgenannte Problem wird erfindungsgemäß dadurch gelöst, dass die Masse nach dem Zusammenmischen auf unter 130°C abgekühlt wird und ihr dann ein thermisch vernetzbares Harz oder eine thermisch vernetzbare Reagenzkombination zugesetzt wird.

Durch diese Verfahrensweise entsteht zunächst eine für den Auftrag auf Karosseriebleche im Extrusionsverfahren durch Breitschlitzdüsen ausreichend fließfähige Masse. Erst wenn nach dem sich anschließenden Lackieren des Kraftfahrzeugs dieses im Lacktrockenofen etwa eine halbe Stunde lang Temperaturen von etwa 160°C bis 200°C ausgesetzt wird, kommt es zur Polyreaktion der zugesetzten Stoffe und damit zu einem Aushärten der Masse. Das vernetzbare Harz bildet vermutlich in der bituminösen Masse ein schaumartiges Gitter, welches die bituminöse Masse festhält. Dadurch bleibt die Masse nach der Polreaktion (Vernetzung) auch bei hohen Temperaturen fest, so dass sie unabhängig von den Temperaturen ihre aussteifende Funktion beibehält.

Aus der Literatur und der Erfahrung der Fachleute war eine Polykondensation von Alkylphenolharzen im Bitumenmedium bisher nicht bekannt. Messungen zeigten, dass bei einer nach dem erfindungsgemäßen Verfahren hergestellten Masse der Verlustfaktor bei höheren Temperaturen, wie sie im Motorraum eines Kraftfahrzeugs herrschen, wesentlich höher liegt als bei einer vergleichbaren bituminösen Masse ohne den Zusatz eines vernetzbaren Harzes oder der thermisch vernetzbaren Reagenzkombination. Deshalb ist eine nach dem Verfahren hergestellte Masse ganz besonders als Antidröhnmasse im Motorraum und Dachbereich von Kraftfahrzeugen geeignet.

Die Abkühlung der Masse vor Zugabe des thermisch vernetzbaren Harzes kann besonders einfach dadurch erfolgen, dass die Abkühlung durch Zugabe weiterer Rezepturbestandteile erfolgt.

Das erfindungsgemäße Verfahren eignet sich auch zur Herstellung von Bitumenfolien, indem die Masse nach der Zugabe des thermisch vernetzbaren Harzes oder der thermisch vernetzbaren Reagenzkombination zu einer Folie kalandriert wird. Solche akustisch wirksamen Bitumenfolien können ein- oder mehrschichtig sein und insbesondere als Antidröhnbeläge in Kraftfahrzeugen dienen und je nach Einbauart im Kraftfahrzeug selbstklebend, schmelzklebend oder magnetisch haftend sein. Auch eine Ausrüstung solcher Folien mit Abdeckungen, wie zum Beispiel Metallfolien, ist möglich.

Das zweitgenannte Problem, nämlich die Schaffung einer nach dem Verfahren herstellbaren, bituminösen Masse und einer Bitumenfolie, wird erfindungsgemäß gelöst durch einen Zusatz eines thermisch vernetzbaren Harzes oder eine vernetzbare Reagenzkombination.

Eine solche Masse ist gut heißapplizierbar und hat nach der Polyreaktion und Vernetzung eine hohe aussteifende Wirkung, ohne dass ihre akustische Wirksamkeit sich verschlechtert. Diese wird sogar bei Temperaturen, wie sie im Motorraum und Dachbereich von Kraftfahrzeugen auftreten, durch den erfindungsgemäßen Zusatz wesentlich höher als bei bituminösen Massen ohne den Zusatz. Weitere Vorteile der erfindungsgemäßen Masse im Vergleich zu den bisherigen, bituminösen Massen liegt darin, dass sie nach dem Aushärten eine trockene Oberfläche aufweist und nicht klebrig ist und dass aus ihr keine zu einem Fogging führenden Stoffe ausgasen.

Vorteilhafte Weiterbildungen der Erfindung sind in den Unteransprüchen gekennzeichnet. Ihre spezifischen Vorteile ergeben sich aus den nachfolgenden Ausführungen. Die erfindungsgemäße Masse kann mittels Flachdüsen auf die Karosseriebleche aufgebracht werden. Möglich ist es allerdings auch, dass die Masse als Ausgangsmaterial für eine auf Bleche aufzubringende, akustisch wirksame Bitumenfolie dient. Dann erreicht man die Versteifungswirkung dadurch, dass man die Folie auf die Karosseriebleche aufklebt. Hierbei hat man den Vorteil, dass die Folie vor der Polykondensation im Lacktrockenofen leicht verformbar ist und sich deshalb leicht der Kontur und den Sicken der Kraftfahrzeugbleche anpassen kann. Denkbar sind jedoch auch Sandwich-Systeme wie zum Beispiel Magnetfolien mit versteifen Bitumenfolien oder Magnetfolien mit kaschierter Aluminiumfolie.

Die erfindungsgemäße Masse hat im ausgehärteten Zustand folgende physikalisch-mechanischen Eigenschaften:

| | |
|---|---|
| Wärmefestigkeit | -bis 215°C/30min (über Kopf + senkrecht) |
| Härte | 85 - 98 Shore |
| Biegefestigkeit (EN 63) | 28 - 36 kN/cm²(bei 3mm Durchbiegung) |
| Elastizitätsmodul (EN 65) | 160 - 210 Gpa (bei 3mm Durchbiegung) |

Als Alkylphenolharze haben sich als vorteilhaft die unter den Handelsnamen der Firma Vianova Resins GmbH, Wiesbaden, bekannten Harze Alresen PA 101, Alresen PA 321 und Alresen PA 341 erwiesen. Diese Alkylphenolresole haben einen unterschiedlichen molekularen Aufbau und enthalten unterschiedliche Mengen von reaktiven Methylol- und Methylenethergruppen. Diese Gruppen bewirken die Vernetzung, führen jedoch zugleich zu einer guten Oberflächenhaftung.

Um voll wirksam zu sein, müssen dies Alresenharze mit Metalloxiden umgesetzt werden. Dabei konnten mit Magnesiumoxid gute Ergebnisse erzielt werden. Das ebenfalls als Zusatz dienende Resorcin wirkt bei der Elektrofil-Substitution sehr aktiv. Es reagiert schon ab 60°C mit Methylolgruppen und reguliert den Grad der Vernetzung und damit die Härte der Masse, ihre Biegefestigkeit, den Elastizitätsmodul, die Wärmestandsfestigkeit und die akustischen Eigenschaften der Masse.

Für den Anwendungsfall als Antidröhnmasse stellte sich die folgende Rezeptur als besonders vorteilhaft heraus. Bei dieser Mischung verschiedener Polymere, Harzen und Wachsen ist die Polarität des Reaktionsmediums der angestrebten Reaktion optimal angepasst. Weiterhin ergeben sich bei dieser Zusammensetzung kontrollierbare Parameter für die physiko-mechanischen Eigenschaften der Masse.

| | |
|---|---|
| Bitumen B 180 | 42,0% |
| Haftvermittler Centroplast | 1,5% |
| Polymere | 1,3% |
| Wachs | 5,0% |
| nicht reaktives Harz | 1,5% |
| reaktives Harz | 8,5% |
| Magnesiumoxid | 2,0% |
| Resorcin | 0,5% |
| Aluminiumpaste | 2,0% |
| | |

| Füllstoffe: | |
|---|---|
| Mikrosilikat Hohlkugeln | 14,0% |
| Glimmer | 10,0% |
| Kreide | 2,7% |
| ungelöschter Kalk | 5,0% |

Die Art des Alkylphenolharzes und das Gewichtsverhältnis zum Magnesiumoxid und Resorcin bestimmen den Grad der Versteifung der Masse und beeinflussen die akustische Wirksamkeit, das Wärmeverhalten, die Haftung, die Viskosität und Fließparameter und die mechanischen Eigenschaften. Der ungelöschte Kalk in der Masse bindet das durch die Polykondensation entstehende Wasser.

Besonders vorteilhafte Eigenschaften hat die Masse, wenn als Haftvermittler formyliertes, aliphatisches Polyurethan vorgesehen ist, als Polymere 1 - 4% Polyvinylacetat-Copolymerisat (PVA) verwendet wird und wenn als nicht reaktives Harz hydriertes Kohlenwasserstoff-Harz vorgesehen ist.

Zur weiteren Verdeutlichung der Erfindung wird nachfolgend auf die Zeichnung Bezug genommen. Diese zeigt in
- Fig.1: den Temperaturverlauf der Masse während der Zugabe ihrer einzelnen Bestandteile,
- Fig.2: die Viskosität der erfindungsgemäßen Masse in Abhängigkeit von der Temperatur,
- Fig.3: den Verlustfaktor nach DIN 53440 der erfindungsgemäßen Masse im Vergleich zu einer üblichen Masse ohne polymerisiertem Harzzusatz.

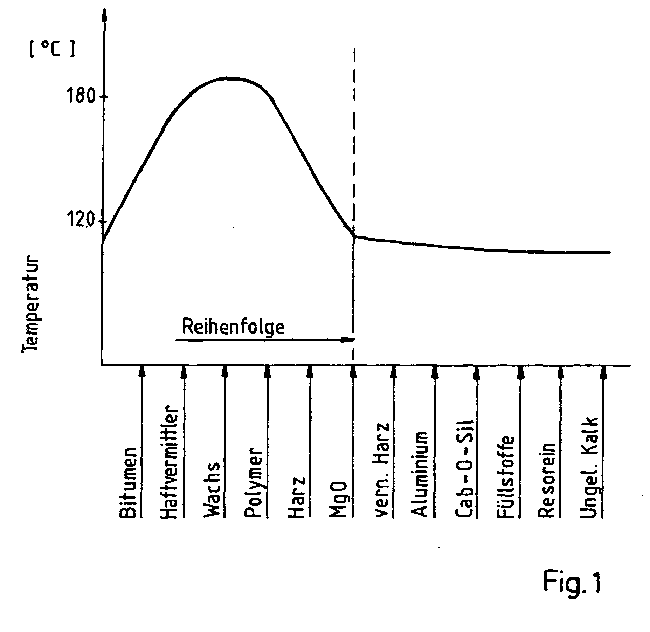

Die Figur 1 zeigt, dass die bituminöse Masse zunächst bei Temperaturen bis etwa 180°C zusammengemischt wird. Dann erfolgt eine Abkühlung auf 110 bis 120°C, mindestens jedoch 125°C. Erst dann werden insbesondere das vernetzbare Harz, aber auch das Magnesiumoxid, das Resorcin und weitere Zusätze beigegeben.

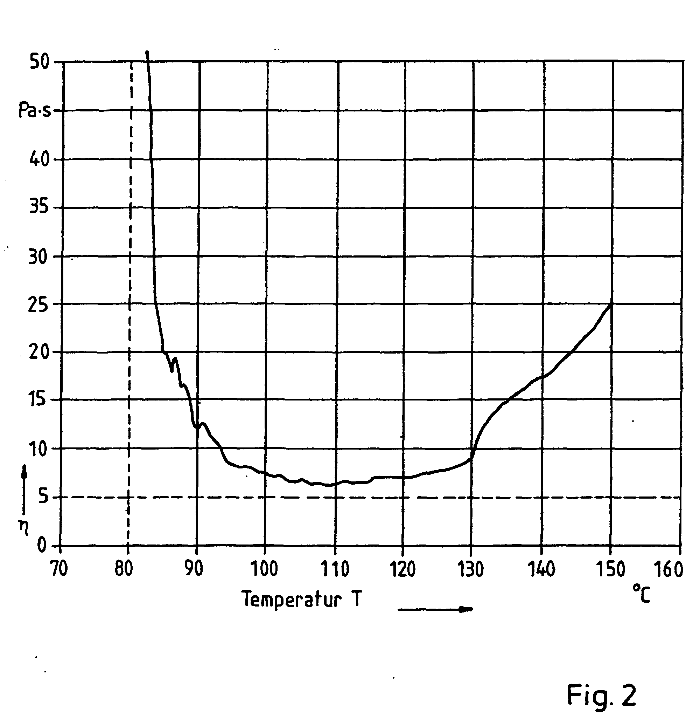

Die Figur 2 lässt erkennen, dass bei der erfindungsgemäßen Masse die Viskosität bei Temperaturen über 89°C zunächst stark abfällt, bei 130° jedoch wieder relativ steil ansteigt, weil dann die Vernetzung von reaktivem Harz beginnt. Diese durch Polykondensation und Vernetzung hervorgerufene Versteifung bleibt auch bei einer anschließenden Abkühlung der Masse erhalten.

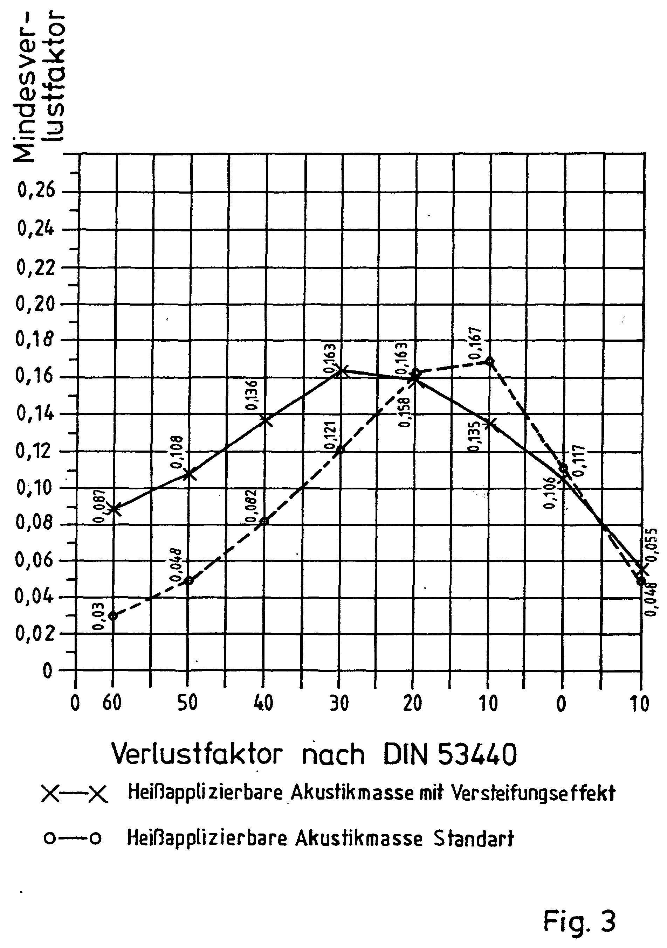

Dem Diagramm gemäß Figur 3 ist zu entnehmen, dass sich durch den erfindungsgemäßen Zusatz des vernetzbaren Harzes die Verlustfaktoren bei höheren Temperaturen wesentlich höher sind als bei einer herkömmlichen bituminösen Masse. Die Antidröhnwirkung hat sich also als Ganzes zu höheren Temperaturen hin verschoben.

## Patentansprüche

1. Verfahren zur Herstellung einer heißapplizierbaren, akustisch wirksamen, bituminösen Masse, insbesondere Antidröhnmasse für Kraftfahrzeuge, bei welchem Bitumen und weitere Stoffe, wie Haftvermittler, Polymere, Wachse und nicht vernetzbare Harze, bei Temperaturen von 130°C bis 180°C zu einer homogenen Masse zusammengemischt werden, **dadurch gekennzeichnet, dass** die Masse nach dem Zusammenmischen auf unter 130°C abgekühlt wird und ihr dann ein thermisch vernetzbares Harz oder eine thermisch vernetzbare Reagenzkombination zugesetzt wird.

2. Verfahren nach Anspruch 1, **dadurch gekennzeichnet, dass** die Abkühlung durch Zugabe weiterer Rezepturbestandteile erfolgt.

3. Verfahren nach den Ansprüchen 1 oder 2, **dadurch gekennzeichnet, dass** die Masse nach der Zugabe des thermisch vernetzbaren Harzes oder der thermisch vernetzbaren Reagenzkombination zu einer Folie kalandriert wird.

4. Nach dem Verfahren gemäß einem der vorangehenden Ansprüche herstellbare, heißapplizierbare, akustisch wirksame, bituminöse Masse, insbesondere Antidröhnmasse für Kraftfahrzeuge, bei welche Bitumen und weitere Stoffe, wie Haftvermittler, Polymere, Wachse und nicht vernetzbare Harze enthält, **gekennzeichnet durch** einen Zusatz eines thermisch vernetzbaren Harzes oder eine vernetzbare Reagenzkombination.

5. Nach dem Verfahren gemäß einem der vorangehenden Ansprüche herstellbare, heißapplizierbare, akustisch wirksame Bitumenfolie, insbesondere Antidröhnmasse für Kraftfahrzeuge, bei welche Bitumen und weitere Stoffe, wie Haftvermittler, Polymere, Wachse und nicht vernetzbare Harze enthält, **gekennzeichnet durch** einen Zusatz eines thermisch vernetzbaren Harzes oder eine vernetzbare Reagenzkombination.

6. Masse nach den Ansprüchen 4 oder 5, **dadurch gekennzeichnet, dass** sie als thermisch vernetzbare Reagenzkombination 3 - 25% Alkylphenolharz, 2 - 5% Magnesiumoxid und 0,2 - 1% Resorcin enthält.

7. Masse nach den Ansprüchen 4 oder 5, **dadurch gekennzeichnet, dass** sie zusätzlich gekapptes Polyisocyanat enthält.

8. Masse nach den Ansprüchen 4 oder 5, **gekennzeichnet durch** folgende Zusammensetzung:
| | |
|---|---|
| Bitumen | 35 - 80% |
| Haftvermittler | 0,5 - 2% |
| Polymere | 1 - 4% |
| Wachs | 2 - 6% |
| nicht reaktives Harz | 0 - 3% |
| Alkylphenolharz | 3 - 25% |
| Magnesiumoxid | 2 - 5% |
| Resorcin | 0,2 - 1% |
| Thixotropiehilfsmittel | 2 - 6% |
| Aluminiumpaste | 1 - 4% |
| Füllstoffe wie Kreide, Kalksteinmehl | 15 - 30% |
| ungelöschter Kalk | 3 - 6%. |

9. Masse nach den Ansprüchen 4 oder 5, **gekennzeichnet durch** folgende Zusammensetzung:
| | |
|---|---|
| Bitumen B 180 | 42,0% |
| Haftvermittler Centroplast | 1,5% |
| Polymere | 1,3% |
| Wachs | 5,0% |
| nicht reaktives Harz | 1,5% |
| reaktives Harz | 8,5% |
| Magnesiumoxid | 2,0% |
| Resorcin | 0,5% |
| Aluminiumpaste | 2,0% |
| Füllstoffe: | |
|---|---|
| Mikrosilikat Hohlkugeln | 14,0% |
| Glimmer | 10,0% |
| Kreide | 2,7% |
| ungelöschter Kalk | 5,0% |

10. Masse nach den Ansprüchen 4 oder 5, **dadurch gekennzeichnet, dass** sie als thermisch vernetzbares Harz durch Zugabe von Melaminharz oder Hexamethylentatramin ausgehärtetes Alkylphenolharz (Typ Novolak) enthält.

11. Masse nach den Ansprüchen 4 oder 5, **dadurch gekennzeichnet, dass** sie als thermisch vernetzbares Harz Epoxydharze in Kombination mit nicht selbsthärtenden Phenolharzen enthält.

12. Masse nach zumindest einem der vorangehenden Ansprüche, **dadurch gekennzeichnet, dass** als Haftvermittler formyliertes, aliphatisches Polyurethan vorgesehen ist.

13. Masse nach zumindest einem der vorangehenden Ansprüche, **dadurch gekennzeichnet, dass** als Polymere 1 - 4% Polyvinylacetat-Copolymerisat (PVA) vorgesehen ist.

14. Masse nach zumindest einem der vorangehenden Ansprüche, **dadurch gekennzeichnet, dass** als nicht reaktives Harz hydriertes Kohlenwasserstoff-Harz vorgesehen ist.

## Claims

1. Process for the production of a hot-applicable, acoustically effective bituminous compound, in particular an anti-drumming compound for motor vehicles, in which bitumen and further substances such as bonding agents, polymers, waxes and non-crosslinkable resins are blended into a homogeneous compound at temperatures of 130°C to 180°C, **characterized in that** the compound is cooled, after blending, to below 130°C and a thermally crosslinkable resin or thermally crosslinkable reagent combination is then added to it.

2. Process according to Claim 1, **characterized in that** cooling is brought about by the addition of further ingredients.

3. Process according to Claim 1 or Claim 2, **characterized in that** after the addition of the thermally crosslinkable resin or thermally crosslinkable reagent combination, the compound is calendered into a sheet.

4. Hot-applicable, acoustically effective bituminous compound, in particular an anti-drumming compound for motor vehicles, that can be produced by the process according to any one of the preceding claims, containing bitumen and further substances such as bonding agents, polymers, waxes and non-crosslinkable resins, **characterized by** addition of a thermally crosslinkable resin or a crosslinkable reagent combination.

5. Hot-applicable, acoustically effective bitumen sheet, in particular an anti-drumming compound for motor vehicles, that can be produced by the process according to any one of the preceding claims, containing bitumen and further substances such as bonding agents, polymers, waxes and non-crosslinkable resins, **characterized by** addition of a thermally crosslinkable resin or a crosslinkable reagent combination.

6. Compound according to Claim 4 or Claim 5, **characterized in that** it contains 3 - 25% alkylphenol resin, 2 - 5% magnesium oxide and 0.2 - 1% resorcin as thermally crosslinkable reagent combination.

7. Compound according to Claim 4 or Claim 5, **characterized in that** it additionally contains capped polyisocyanate.

8. Compound according to Claim 4 or Claim 5, **characterized by** the following composition:
| | |
|---|---|
| Bitumen | 35 - 80 % |
| Bonding agent | 0.5 - 2 % |
| Polymers | 1 - 4 % |
| Wax | 2-6% |
| Non-reactive resin | 0 - 3 % |
| Alkylphenol resin | 3 - 25 % |
| Magnesium oxide | 2 - 5 % |
| Resorcin | 0.2 - 1 % |
| Thixotropic agent | 2 - 6 % |
| Aluminium paste | 1 - 4 % |
| Fillers such as chalk, ground limestone | 15 - 30 % |
| Unslaked lime | 3 - 6 %. |

9. Compound according to Claim 4 or Claim 5, **characterized by** the following composition:
| | |
|---|---|
| Bitumen B 180 | 42.0% |
| Centroplast bonding agent | 1.5% |
| Polymers | 1.3% |
| Wax | 5.0% |
| Non-reactive resin | 1.5% |
| Reactive resin | 8.5% |
| Magnesium oxide | 2.0% |
| Resorcin | 0.5% |
| Aluminium paste | 2.0% |
| Fillers: microsilicate hollow spheres | 14.0% |
| Mica | 10.0% |
| Chalk | 2.7% |
| Unslaked lime | 5.0%. |

10. Compound according to Claim 4 or Claim 5, **characterized in that** it contains alkylphenol resin (Novolak type) cured by addition of melamine resin or hexamethylenetetramine, as thermally crosslinkable resin.

11. Compound according to Claim 4 or Claim 5, **characterized in that** it contains epoxy resins in combination with non-self-curing phenolic resins, as thermally crosslinkable resin.

12. Compound according to at least one of the preceding claims, **characterized in that** formylated aliphatic polyurethane is provided as bonding agent.

13. Compound according to at least one of the preceding claims, **characterized in that** 1 - 4 % polyvinylacetate copolymer (PVA) is provided as polymers.

14. Compound according to at least one of the preceding claims, **characterized in that** hydrogenated hydrocarbon resin is provided as non-reactive resin.

## Revendications

1. Procédé de préparation d'une masse bitumeuse, applicable à chaud, efficace d'un point de vue acoustique, notamment d'une masse insonorisante pour les véhicules, qui contient des bitumes et d'autres substances, telles que des agents d'adhésion, des polymères, des cires et des résines non réticulables, et est mélangée en une masse homogène à des températures de 130° C à 180° C, **caractérisé en ce que** la masse est refroidie après le mélange à une température inférieure à 130° C et **en ce qu'**on y ajoute ensuite une résine thermoréticulable ou une combinaison de réactifs thermoréticulables.

2. Procédé selon la revendication 1, **caractérisé en ce que** le refroidissement est réalisé après l'ajout d'autres composés de formulation.

3. Procédé selon l'une quelconque des revendications 1 ou 2, **caractérisé en ce que** la masse est calandrée après l'ajout de la résine thermoréticulable ou de la combinaison de réactifs thermoréticulables en une pellicule.

4. Masse bitumeuse efficace d'un point de vue acoustique, applicable à chaud, pouvant être fabriquée d'après le procédé selon l'une quelconque des revendications précédentes, notamment une masse insonorisante pour des véhicules, qui contient des bitumes et d'autres substances, telles que des agents d'adhésion, des polymères, des cires et des résines non réticulables, **caractérisée par** un ajout d'une résine thermoréticulable ou d'une combinaison de réactifs thermoréticulables.

5. Pellicule bitumeuse efficace d'un point de vue acoustique, applicable à chaud, pouvant être fabriquée d'après le procédé selon l'une quelconque des revendications précédentes, notamment une masse insonorisante pour des véhicules, qui contient des bitumes et d'autres substances, telles que des agents d'adhésion, des polymères, des cires et des résines non réticulables, **caractérisée par** un ajout d'une résine thermoréticulable ou d'une combinaison de réactifs thermoréticulables.

6. Masse selon l'une quelconque des revendications 4 ou 5, **caractérisée en ce qu'**elle contient, en tant que combinaison de réactifs thermoréticulables, 3 à 25 % de résine d'alkylphénol, 2 à 5 % d'oxyde de magnésium et 0,2 à 1 % de résorcine.

7. Masse selon l'une quelconque des revendications 4 ou 5, **caractérisée en ce qu'**elle contient en plus un polyisocianate coiffé.

8. Masse selon l'une quelconque des revendications 4 ou 5, **caractérisée par** la composition suivante :
| | |
|---|---|
| Bitumes | 35 à 80 % |
| Agents d'adhésion | 0,5 à 2 % |
| Polymères | 1 à 4 % |
| Cire | 2 à 6 % |
| Résine non réactive | 0 à 3 % |
| Résine d'alkylphénol | 3 à 25 % |
| Oxyde de magnésium | 2 à 5 % |
| Résorcine | 0,2 à 1 % |
| Substance thixotrope | 2 à 6 % |
| Pâte d'aluminium | 1 à 4 % |
| Charges telles que de la craie, pierre calcaire | 15 à 30 % |
| Chaux vive | 3 à 6 % |

9. Masse selon l'une quelconque des revendications 4 ou 5, **caractérisée par** la composition suivante :
| | |
|---|---|
| Bitumes B 180 | 42,0 % |
| Agents d'adhésion, centroplast | 1,5 % |
| Polymères | 1,3 % |
| Cire | 5,0 % |
| Résine non réactive | 1,5 % |
| Résine réactive | 8,5 % |
| Oxyde de magnésium | 2,0 % |
| Résorcine | 0,5 % |
| Pâte d'aluminium | 2,0 % |
| Charge : Billes creuses de microsilicate | 14,0 % |
| Mica | 10,0 % |
| Craie | 2,7 % |
| Chaux vive | 5,0 % |

10. Masse selon l'une quelconque des revendications 4 ou 5, **caractérisée en ce qu'**elle contient en tant que résine thermoréticulable de la résine d'alkylphénol (type novolaque) durcie par ajout de résine de mélamine ou d'hexaméthylènetétramine.

11. Masse selon l'une quelconque des revendications 4 ou 5, **caractérisée en ce qu'**elle contient en tant que résine thermoréticulable des résines époxydes en combinaison avec des résines de phénol non autodurcissantes.

12. Masse selon au moins l'une quelconque des revendications précédentes, **caractérisée en ce que** on prévoit en tant qu'agent d'adhésion, du polyuréthane aliphatique formylé.

13. Masse selon au moins l'une quelconque des revendications précédentes, **caractérisée en ce qu'**on prévoit en tant que polymères 1 à 4 % de copolymérisat de polyvinylacétate (PVA).

14. Masse selon au moins l'une des revendications précédentes, **caractérisée en ce que** l'on prévoit en tant que résine non réactive, une résine d'hydrocarbure hydrogénée.
